Europäisches Patentamt

European Patent Office

Office européen des brevets

(11) Numéro de publication: **0 436 454 A1**

## (12) DEMANDE DE BREVET EUROPEEN

(21) Numéro de dépôt: 90450002.2

(22) Date de dépôt: 05.01.90

(51) Int. Cl.⁵: **G01N 27/22**

(43) Date de publication de la demande:
10.07.91 Bulletin 91/28

(84) Etats contractants désignés:
AT BE CH DE ES FR GB GR IT LI LU NL SE

(71) Demandeur: **PIONEER FRANCE MAIS SA**
**4 Rue Paul Berniès**
**F-31075 Toulouse cédex(FR)**

(72) Inventeur: **Moulin, Jean-Marc**
**4, rue Paul Berniès**
**F-31075 Toulouse Cedex(FR)**
Inventeur: **Batut, Henri**
**4, Rue Paul Berniès**
**F-31075 Toulouse Cedex(FR)**

(74) Mandataire: **Ravina, Bernard**
**RAVINA S.A. 24, boulevard Riquet**
**F-31000 Toulouse(FR)**

(54) Détecteur de grains à semer.

(57) Le détecteur de grains à semer est conçu pour être logé entre les deux flancs d'un soc (6) du semoir.

Il est constitué par un boîtier étanche (14) solidaire d'un condensateur à air dont les électrodes (15) et (16) sont portées par deux plaques isolantes munies des moyens d'écartement (23) et (24) pour la fixation par coincement.

Des moyens électroniques sont prévus pour écarter l'influence de fragments de terre entre les deux électrodes sur la reconnaissance du passage de grains en question.

Fig.3

EP 0 436 454 A1

La présente invention concerne un perfectionnement sur un détecteur de présence ou de passage de particules comme les grains à semer ayant une constante diélectrique très élevée par rapport à celle de l'air.

Un détecteur de ce type est décrit dans le brevet américain US 4,710,757.

Le principe de fonctionnement de ce détecteur est de constater la variation de capacité d'un condensateur à air constitué de deux électrodes entre lesquelles passent les particules à détecter ; sur l'une des deux électrodes de ce condensateur à air sont appliqués des signaux constitués par une tension alternative, sur l'autre électrode les signaux transmis sont, dans l'ordre, recueillis, rectifiés, amplifiés, différenciés puis comparés à une valeur fixe choisie en fonction de la taille des particules à détecter.

Pour détecter des grains à semer, ce type de détecteur est à monter sur un semoir de telle sorte que l'espace entre les deux électrodes du détecteur constitue une partie de passage des dits grains.

Dans un semoir, le passage de grains se situe entre un organe distributeur et un sillon fait dans la terre pour recevoir les dits grains.

Sur certains types de semoir, ce passage entre l'organe distributeur et le sillon est constitué par un tube de guidage. Dans ce cas, les deux électrodes constituant le condensateur à air sont à fixer par serrage d'une part et d'autre du dit tube de guidage qui est réalisé lui-même en matière diélectrique.

Sur d'autres types de semoir, il n'y a pas de tube de guidage entre l'organe distributeur et le sillon.

En effet, le sillon est réalisé par un soc spécial dont l'extrémité est pleine et le corps est constitué par deux flancs entre lesquels les grains à semer sont directement largués par l'organe distributeur.

L'organe distributeur se trouve directement au dessus du soc ; le passage des grains à semer s'effectue essentiellement entre les deux flancs du soc.

Le soc du semoir est enfoncé dans la terre et fixé sur le semoir qui l'entraine en mouvement linéaire créant ainsi un sillon.

Les deux flancs du soc se trouvent partiellement au dessous de la surface de terre.

L'espace entre les deux flancs du soc n'est pas convenable pour recevoir le condensateur à air du détecteur décrit dans le brevet US 4 710 757 pour les raisons suivantes :

- l'espace entre les deux flancs du soc est susceptible de contenir pour des périodes de temps quelconques et d'une façon aléatoire des fragments de terre mis en mouvement par le soc, ceci serait traduit continuellement par des variations de la capacité du dit condensateur,

- les vibrations mécaniques brutales inévitables du soc font vibrer l'ensemble des deux électrodes et très probablement l'une par rapport à l'autre et par conséquent la capacité du condensateur.

Pour ces raisons, entre autres, la présente invention a comme but de proposer des perfectionnements à ce type de détecteur pour pouvoir placer le condensateur à air entre les deux flancs du soc tout en évitant que le mouvement aléatoire des fragments de terre entre les deux électrodes de condensateur rende la détection de passage de grains entre elles et par conséquent leur comptage et leur gestion érronés.

Un autre but de la présente invention est d'éviter les vibrations relatives entre les deux électrodes du condensateur à air et par conséquent les variations en capacité dues à ces variations.

A cet effet, le détecteur de grains de semence, faisant l'objet de la présente invention est du type de ceux comportant un condensateur à air constitué de deux électrodes fixées chacune sur une plaque isolante, ces deux électrodes sont dirigées face à face et entre elles passent les grains à détecter, sur l'une de ces deux électrodes sont appliqués des signaux de tension alternative, sur l'autre électrode des signaux transmis par induction sont recueillis et traités par des moyens de rectification, d'amplification, de différenciation, puis de comparaison avec une valeur de tension présélectionnée.

Le détecteur selon la présente invention se caractérise essentiellement en ce que :

A/ Les deux plaques isolantes sur chacune étant fixée une électrode sont :

   a) munies de moyens d'écartement latéral pour la fixation par coincement dans l'emplacement entre deux flancs d'un soc de semoir,

   b) munies, chacune, sur son côté venant s'appuyer contre un un des deux flancs du soc, par une couche élastique servant à amortir les vibrations mécaniques.

B/ Les moyens de traitement comportent :

   - un moyen de différenciation dont l'entrée recevant les signaux transmis par induction et indicatifs de la capacité (C) instantanée du condensateur à air et la sortie livrant des signaux représentant le changement (dc/dt) de cette capacité en fonction du temps (t),

   - un moyen de filtration dont l'entrée recevant les signaux représentant ces changements (dc/dt) et dont la sortie livrant uniquement des signaux représentant les changements rapides supérieurs à une valeur donnée écartant ainsi les changements lents dûs à l'existence aléatoire de fragments de terre entre les deux flancs du soc.

- un moyen d'amplification recevant et amplifiant uniquement les dits signaux représentant les dits changements rapides.

D'autres avantages et caractéristiques apparaitront à la lecture de la description détaillée ci-après et accompagnée des dessins dans lesquels :

- la figure 1 est un schéma représentant un semoir à tube de plantation équipé du détecteur décrit dans le brevet US,
- la figure 2A est une vue de dessus du soc à deux flancs,
- la figure 2B est une vue en coupe médiane du même soc
- la figure 3 est un dessin en perspective du détecteur sujet de la présente invention,
- la figure 4 est un schéma électronique du détecteur,
- la figure 6 est une vue en coupe du condensateur à air.

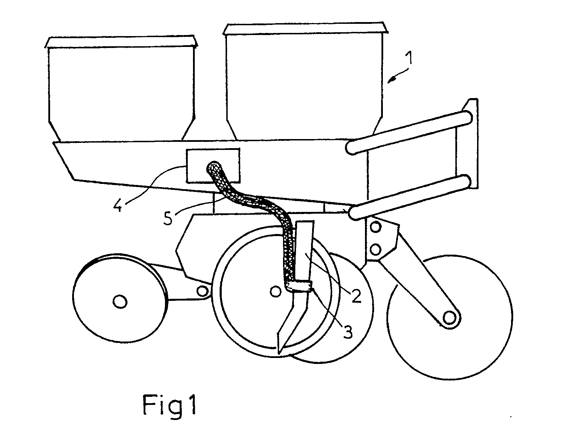

Sur la figure 1, est présenté un semoir muni d'un tube de plantation (2) autour duquel le condensateur à air (3) décrit dans le brevet US 4 710,757 est monté.

La partie électronique (4) est liée au condensateur (3) par un câble (5).

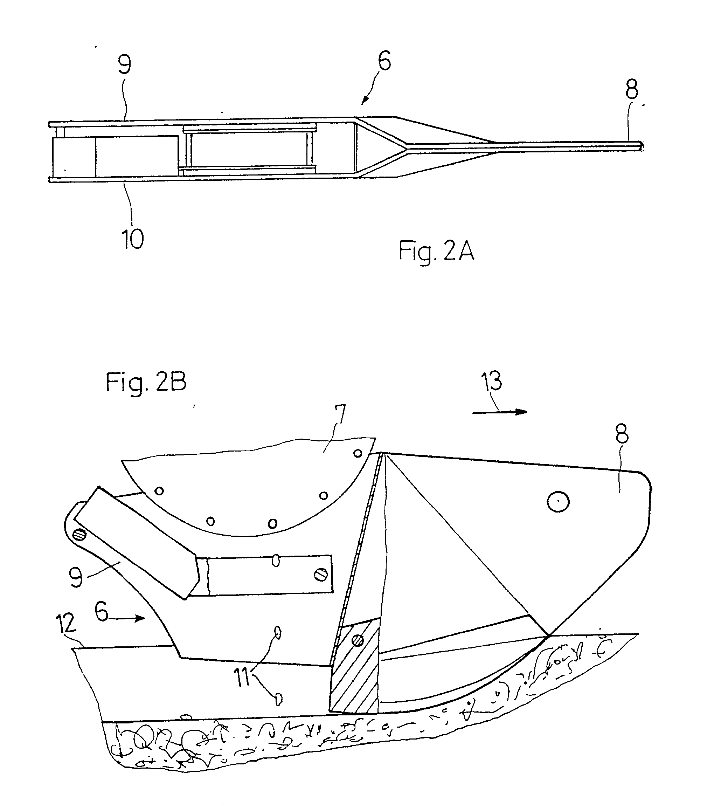

Sur la figure 2 est présenté le soc (6) d'un autre type de semoir (1) dans lequel l'organe distributeur de grains (7) se trouve directement au dessus du soc.

Le soc (6) est composé d'une extrémité (8) pleine et des deux flancs (9) et (10).

L'organe distributeur largue les grains (11) entre les deux flancs du soc.

En fonctionnement, le soc est enfoncé dans le sol (12) et entrainé en mouvement dans le sens de la flèche (13).

Les fragments de terre mis en mouvement par le soc peuvent se trouver entre les deux flancs (9) et (10) du soc, ceci selon des positions et pendant des durées de temps aléatoires.

Des vibrations mécaniques sont produites dans le soc en mouvement, ceci vu d'un côté l'inégalité du sol, autrement dit, la variation de la profondeur d'enfoncement du soc dans le sol et d'un autre côté la non homogénéïté du sol même.

Le détecteur de grains à condensateur à air, selon la présente invention, est conçu pour être logé entre les deux flancs du soc, ceci en évitant les inconvénients de vibrations du dit soc et de l'éventuelle présence de fragments de terre.

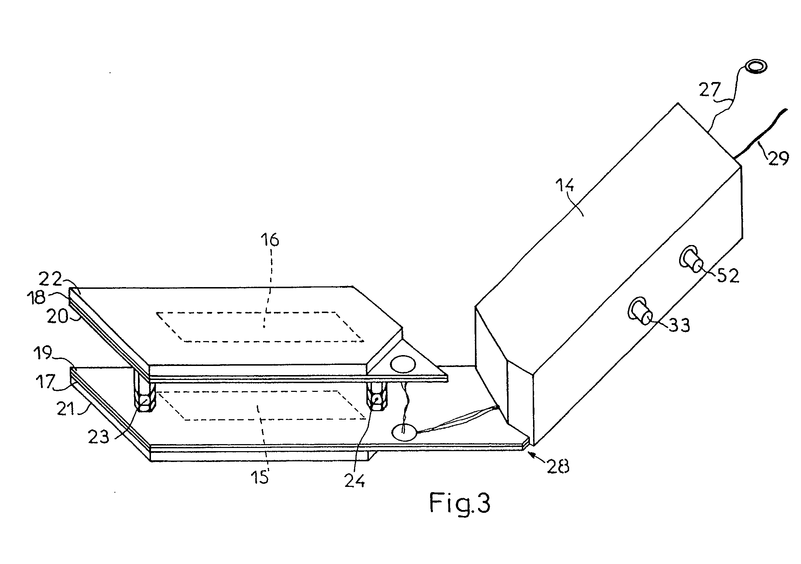

Sur la figure 3, le détecteur (28) présenté est constitué d'un boîtier (14) contenant des moyens électroniques et un condensateur à air composé des deux électrodes (15) et (16). L'électrode (15) est portée par une plaque isolante (17) solidaire du boîtier (14).

L'électrode (16) est portée par une plaque séparée (18).

Les deux éléctrodes (15) et (16) sont protégées respectivement par des couches isolantes (19) et (20).

Les plaques (17) et (18) portent, chacune, sur son côté extérieur (le côté intérieur porte l'électrode) une couche de matière élastique.

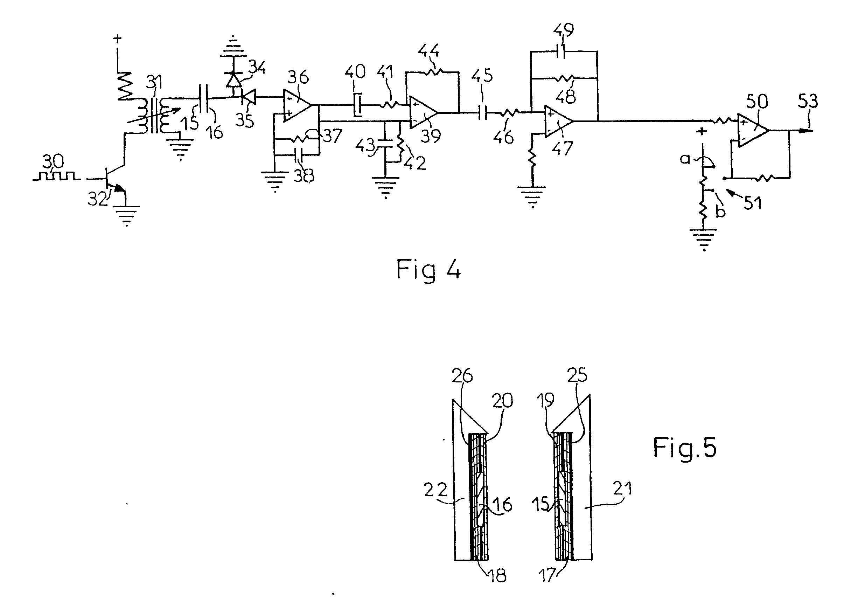

Les deux couches élastiques (21) et (22) (figure 5) s'étendent chacune au-delà de la plaque isolante correspondante.

Chaque couche élastique couvre la rive supérieure de la plaque isolante correspondante et également celle de la couche isolante protectrice, associée.

Chaque couche élastique présente à son niveau supérieur, juste au-dessus des dites rives supérieures, une rampe afin de ne pas présenter un obstacle aux grains passant.

Ces deux couches élastiques (21) et (22) sont réalisées par exemple en caoutchouc.

Entre la plaque isolante (17) et la couche élastique (21) est intercalée une couche conductrice (25) (figure 5).

Entre la plaque isolante (18) et la couche élastique (22) est intercalée une couche conductrice (26).

Les deux couches conductrices (25) et (26) sont reliées entre elles, puis à la masse à l'aide d'une prise de masse (27).

Les deux plaques (17) et (18) sont reliées par deux moyens d'écartement et de serrage (23) et (24).

Les deux moyens d'écartement et de serrage (23) et (24) sont deux moyens classiques comme, par exemple, vis et écrou.

Le boîtier (14) est construit sur le même plan que la plaque (17).

Ce boîtier et cette plaque sont solidaires et positionnés l'un par rapport à l'autre suivant un angle compatible avec la forme des deux flancs (9) et (10) du soc (6).

Les deux plaques (17) et (18) sont à introduire entre les deux flancs (9) et (10) et à serrer par les moyens d'écartement et de serrage (23) et (24) contre les faces internes des deux flancs (9) et (10).

Les deux couches élastiques (21) et (22) viennent s'écraser entre les surfaces intérieures des deux flancs (9) et (10) et les surfaces extérieures des deux plaques (17) et (18) servant ainsi à amortir les vibrations en provenance de ces deux flancs vers ces deux dites plaques.

Le détecteur (28) est installé entre les deux flancs du soc de telle sorte que les deux électrodes (15) et (16) soient plus ou moins parallèles à l'axe médian du soc et le boîtier (14) soit inclu entre les deux flancs. Le détecteur (28) est donc inclu dans sa totalité entre les deux flancs du soc.

Le boîtier (14) est étanche, il contient des moyens électriques servant d'un côté à appliquer des signaux alternatifs sur l'électrode (15) et d'un autre côté à cueillir les signaux qui apparaissent sur l'électrode (16) et les traiter pour conclure ou non le passage d'un grain entre les deux électrodes (15) et (16).

Entre ces deux électrodes (16) et (16) les grains à semer passent plus ou moins verticalement à une vitesse calculable à partir de l'accélération de gravité ( 9 m/S²), de la distance entre l'emplacement de l'organe distributeur et celui des deux électrodes (15) et (16), de la résistance de l'air vis à vis des grains en question, du mouvement initial donné par l'organe distributeur (faisant partie du semoir même) aux grains en question.

Entre ces deux mêmes électrodes (15) et (16) des fragments de terre risquent de se présenter selon des positions et durant des périodes de temps aléatoires, ceci dû au mouvement du soc pour créer le sillon.

Le passage de grains et la présence de fragments de terre entre les deux électrodes entrainent un changement de caractéristiques du diélectrique entre les deux électrodes, ceci car les constantes diélectriques de l'air de grains et de la terre sont différentes.

Ce changement de caractéristiques du diélectrique entre les deux électrodes (15) et (16) entraine un changement de la capacité du condensateur à air constitué par ces deux électrodes.

Ce changement de capacité engendre un changement de la valeur des signaux apparaissant, par induction, sur l'électrode (16).

L'évolution de ce changement de la capacité du condensateur constitué par les deux électrodes (15) et (16) est directement liée à l'évolution de la présence de grains ou de fragments de terre entre ces deux électrodes, autrement dit, à la vitesse de passage de ces grains ou à la vitesse d'apparition ou de disparition des fragments de terre entre ces deux dites électrodes.

La vitesse de passage de grains est influencée essentiellement par l'accélération de gravité et celle d'apparition ou de disparition de fragments de terre par la vitesse du soc entrainé par la semoir.

La vitesse de passage de grains est plus importante que celle d'apparition ou de disparition de fragments de terre entre les deux électrodes du condensateur à air.

Autrement dit, les changements liés au passage de grains sont plus rapides que ceux liés à la présence aléatoire de fragments de terre entre les deux électrodes.

Selon l'invention, le traitement des signaux transmis par induction à travers l'espace entre les deux électrodes (15) et (16) se repose essentiellement à amplifier différentiellement ces dits signaux pour séparer les signaux représentant les changements lents de ceux représentant les changements rapides puis à filtrer ces deux types de signaux pour laisser passer uniquement les signaux représentant les changements rapides et enfin à comparer ces signaux amplifiés avec une valeur prédéterminée et générer une impulsion indiquant le passage d'un grain si la hauteur (l'amplitude) de ces signaux amplifiés est plus importante que la dite valeur prédéterminée.

Les moyens effectuant les opérations ci-avant citées sont contenus dans le boîtier (14), les pulsations générées sont véhiculées, entre autres, par un câble (29) et acheminées à un moyen de comptage et de gestion.

Le boîtier (14) contient également un générateur de fréquence (oscillateur) et un transformateur variable.

Le générateur de fréquence (30) produit des signaux alternatifs. Ces signaux sont appliqués à un primaire de transformateur variable (31) via un transistor (32).

Les signaux produits sur le secondaire du transformateur variable (31) sont appliqués sur l'électrode (15) du condensateur à air.

Le transformateur variable (31) est un transformateur à noyau plongeant, le réglage du transformateur est accéssible par un bouton (33).

Les signaux transmis par induction à l'électrode (16) sont d'abord redréssés par deux redresseurs (34) et (35) puis préamplifiés par un préamplificateur (36).

Le préamplificateur (36) est relié en parallèle à un dispositif de filtrage de hautes fréquences constitué par une résistance (37) et un condensateur (38).

Ce dispositif de filtrage laisse échapper les bruits de hautes fréquences produits par le préamplificateur (36).

Les signaux redréssés et préamplifiés sont appliqués d'un côté à une des deux entrées d'un amplificateur (39) via deux éléments de filtrage (40) et (41) et d'un autre côté à la deuxième entrée du dit amplificateur (39) via un dispositif retardateur constitué par une résistance (42) et un condensateur (43).

L'amplificateur (39), connecté suivant un mode commun, est relié en parallèle à une résistance (44).

L'ensemble constitué par l'amplificateur (39) et le dispositif de retardement (la résistance 42 et le condensateur 43) forme un amplificateur différentiel.

Les signaux redressés et préamplifiés significatifs de la capacité instantanée (C) du condensateur à air sont plus ou moins modifiés suivant le passage rapide de grains (changement rapide) ou suivant la présence de fragments de terre entre les deux électrodes du condensateur (changement lent).

A la sortie de l'amplificateur (39) les signaux produits sont significatifs du changement de la capacité du condensateur à air dans le temps (dc/dt).

Les signaux différentiellement amplifiés sont filtrés par un condensateur (45) qui laisse passer uniquement les changements aigüs (rapides).

Ces signaux filtrés portant uniquement les changements rapides de capacité correspondant au passage de grains sont appliqués via une résistance (46) à une des deux entrées d 'un amplificateur (47).

L'amplificateur (47) est associé, en parallèle, à une résistance (48) et un condensateur (49), ceci pour éliminer les bruits de hautes fréquences produits par l'amplificateur lui-même.

A la sortie de l'amplificateur (47) les signaux produits représentent uniquement les changements rapides dûs au passage de grains.

Un comparateur (50) compare les valeurs des signaux représentant les changements rapides à une valeur de tension prédéterminée. Cette valeur déterminée est à choisir à l'aide d'un sélecteur (51) ayant deux possibilités a-c ou b-c.

Ce sélecteur est accéssible par un communtateur (52).

Le comparateur (50) produit une pulsation à sa sortie (53) chaque fois que la valeur des signaux amplifiés dépasse la valeur de la tension sélectionnnée.

Il est à noter que le réglage du noyau plongeant du transformateur agit sur la valeur (amplitude) des signaux appliqués sur l'électrode (15) et par conséquent sur la valeur de ceux produit par l'amplificateur (47), ceci permet la limitation du choix de la valeur de tension utilisée pour la comparaison.

Cette limitation du choix par le sélecteur (51) facilite beaucoup l'utilisation dans les champs.

IL est à noter également que la liaison électrique entre le condensateur à air et le boîtier (14) peut être imprimée sur la plaque (17).

Le groupement du condensateur à air et le boîtier (14) comportant les différents moyens de traitement diminue beaucoup les effets parasites constatés dans le cas du détecteur du brevet US 4 710, 757.

Les pulsations émises par le comparateur (50) sont reçues par une unité de comptage et de gestion (non présenté).

## Revendications

1. Détecteur de grains de semence du type de ceux comportant un condensateur à air constitué de deux électrodes fixées chacune sur une plaque isolante, ces deux électrodes sont dirigées face à face et entre elles passent les grains à détecter, sur l'une de ces deux électrodes sont appliqués des signaux de tension alternative, sur l'autre électrode, des signaux transmis par induction sont recueillis et traités par des moyens de rectification, d'amplification, de différenciation, puis de comparaison avec une valeur de tension présélectionnée, détecteur étant caractérisé essentiellement en ce que :

A/ les deux plaques isolantes sur chacune étant fixée une électrode sont :

a) munies de moyens d'écartement latéral pour la fixation par coincement dans l'emplacement entre deux flancs d'un soc de semoir,

b) munies, chacune, sur son côté venant s'appuyer contre un un des deux flancs du soc, par une couche élastique servant à amortir les vibrations mécaniques,

B/ les moyens de traitement comportent :

- un moyen de différenciation dont l'entrée recevant les signaux transmis par induction et indicatifs de la capacité (C) instantanée du condensateur à air et la sortie livrant des signaux représentant le changement (dc/dt) de cette capacité en fonction du temps (t),

- un moyen de filtration dont l'entrée recevant les signaux représentant ces changements (dc/dt) et dont la sortie livrant uniquement des signaux repré- sentant les changements rapides su- périeurs à une valeur donnée écartent ainsi les changements lents dûs à l'existence aléatoire de fragments de terre entre les deux flancs du soc.

- un moyen d'amplification recevant et amplifiant uniquement les dits signaux représentant les dits changements rapides.

2. Détecteur selon la revendication 1 caractérisé en ce que les moyens produisant les signaux de tension alternative, le moyen de rectification, le moyen de différenciation, le moyen de filtration et le moyen d'amplification sont contenus, entre autres, dans un boîtier étanche solidaire d'une des deux plaques portant les électrodes du condensateur à air.

3. Détecteur selon la revendication 1 et la revendication 2 dans lequel les signaux de tension alternative sont produits par un générateur de fréquence (oscillateur) et appliqués à l'une des deux électrodes du condensateur à air via un transistor et un transformateur caractérisé en ce que le dit transformateur est un transformateur à noyau plongeant accessible de l'extérieur du boîtier étanche par un bouton de réglage.

4. Détecteur selon la revendication 1 dans lequel les signaux amplifiés représentant uniquement les changements rapides de la capacité du condensateur à air sont comparés à l'aide d'un comparateur à une valeur de tension prédéterminée caractérisé en ce qu'un sélecteur de valeurs de tension fixes permet de choisir une de ces dites valeurs de tension fixes, ce sélecteur étant accessible de l'extérieur du boîtier étanche par un commutateur (33).

5. Détecteur selon la revendication 1 caractérisé en ce que le moyen de différenciation est constitué par un amplificateur possédant deux entrées et une sortie, sur l'une des deux entrées est monté un dispositif retardateur constitué par une résistance (42) et un condensateur (43), le dit amplificateur étant connecté selon un mode commun.

6. Détecteur selon la revendication 1 et la revendication 6 caractérisé en ce que le moyen de différenciation est précédé par un moyen de préamplification constitué par un amplificateur (36).

7. Détecteur selon la revendication 2 caractérisé en ce que le boîtier étanche est obtenu par moulage.

Fig1

Fig. 2A

Fig. 2B

Fig.3

EP 0 436 454 A1

Fig 4

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-4 710 757 (W.C. HAASE)<br>* colonne 1, lignes 5-28; colonne 3, lignes 43-52; colonne 4, ligne 42 - colonne 7, ligne 30; colonne 8, ligne 46 - colonne 10, ligne 28; figures 1-3,5,6 *<br>--- | 1-6 | G 01 N 27/22 |
| A | DE-A-1 598 148 (BRABENDER MESSTECHNIK)<br>* le document en entier *<br>--- | 1 | |
| A | WO-A-8 604 182 (AMER. TEL. & TELEG. CO.)<br>* résumé; page 1, ligne 1 - page 2, ligne 32; page 3, ligne 22 - pag 4, ligne 6; figure 1 *<br>--- | 1 | |
| A | FR-A-1 441 264 (CESKOSLOVENSKA AKADEMIE VED)<br>* le document en entier *<br>--- | 1 | |
| A | US-A-3 771 051 (R.C. ABBE)<br>* résumé; colonne 1, lignes 9-35; colonne 2, ligne 35 - colonne 3, ligne 32; colonne 5, ligne 13 - colonne 10, ligne 5; figures 1,5-8 *<br>----- | 1-6 | **DOMAINES TECHNIQUES RECHERCHES (Int. Cl.5)**<br><br>G 01 N 27/00<br>H 01 G 1/00<br>A 01 C 7/00<br>H 01 G 5/00 |

Le présent rapport a été établi pour toutes les revendications

| Lieu de la recherche | Date d'achèvement de la recherche | Examinateur |
|---|---|---|
| BERLIN | 23-08-1990 | MOUTARD P.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)